# EUROPÄISCHE PATENTSCHRIFT

(11) **EP 1 314 591 B1**
(45) Veröffentlichungstag und Bekanntmachung des Hinweises auf die Patenterteilung: **29.06.2005**
(21) Anmeldenummer: 02026084.0
(22) Anmeldetag: 22.11.2002
(51) Int. Cl.: B60H 1/22, F23N 5/24, G06F 11/00

(54) **Fahrzeug-Zusatzheizgerät und Sicherheitsvorrichtung für ein solches Zusatzheizgerät**
Auxiliary heater for a vehicle and safety device for such a heater
Chauffage auxiliaire pour véhicule et dispositif de sécurité pour un tel appareil

(30) Priorität: 26.11.2001 DE 10157857
(43) Veröffentlichungstag der Anmeldung: 28.05.2003
(73) Patentinhaber: J. Eberspächer GmbH & Co. KG, 73730 Esslingen (DE)
(72) Erfinder: Burner, Erwin, 73099 Adelberg (DE); Bächle, Dieter, 71093 Weil im Schönbuch (DE)
(74) Vertreter: Klunker . Schmitt-Nilson . Hirsch

(56) Entgegenhaltungen:
- EP-A- 1 070 919
- DE-A- 4 403 156
- US-A- 4 081 694
- US-A- 4 263 886
- US-A- 4 366 391

## Beschreibung

Die Erfindung betrifft ein Fahrzeug-Zusatzheizgerät und eine für ein solches Zusatzheizgerät vorgesehene Sicherheitsvorrichtung.

Fahrzeug-Zusatzheizgeräte sind in verschiedenen Ausführungsformen bekannt. Grundlegende Elemente der Heizgeräte sind ein Brenner mit Zündvorrichtung, eine Dosiervorrichtung mit einer Brennstoff-Dosierpumpe und eine Steuereinrichtung, die den Betrieb des Zusatzheizgeräts unabhängig vom Betrieb des Fahrzeugs, z. B. vom Betrieb des Fahrzeugmotors, steuert bzw. regelt.

Die Steuereinrichtung besteht bei modernen Zusatzheizgeräten aus einem Mikrocontroller, der abhängig von ihm zugeführter Eingangsinformation, beispielsweise Heizbedarf, die Kraftstoffdosierpumpe, die Zündvorrichtung und dergleichen steuert.

Um seine Sicherheits- und Regelaufgaben in der gewünschten Weise wahrnehmen zu können, enthält der Mikrocontroller eine Programmierung, die z. B. auf einer Ausgangsleitung ein Ansteuersignal für die Kraftstoff-Dosierpumpe erzeugt.

Das Dokument US-4263886 zeigt eine Fahrzeugheizung mit einer solchen Ansteuerung.

Nun kann es aber vorkommen, dass aufgrund eines Ausfalls des Mikrocontrollers oder eines Fehlers in der Software oder aufgrund sonstiger Störungen das für die Dosierpumpe ausgegebene Ansteuersignal fehlerhaft ist, so dass z. B. der Brenner ständig in Betrieb ist, ohne dass Heizleistung abgefordert wird.

Der Erfindung liegt die Aufgabe zugrunde, ein Fahrzeug-Zusatzheizgerät der oben genannten Art anzugeben, bei dem eine Störung der Steuereinrichtung, insbesondere der als Mikrocontroller ausgebildeten Steuereinrichtung, so abgefangen wird, dass ein gefährlicher Betriebszustand des Heizgeräts vermieden wird, insbesondere ein nicht kontrollierbarer Betrieb der Dosierpumpe des Heizgeräts unterbunden wird.

Gelöst wird diese Aufgabe bei einem Fahrzeug-Zusatzheizgerät der eingangs genannten Art, also einem Zusatzheizgerät mit einer Brennstoff-Dosierpumpe und einer Steuereinrichtung, die Ansteuersignale für die Dosierpumpe ausgibt, durch ein neu-triggerbares (retriggerbares) Monoflop, das an einem Eingang periodische Setzsignale von der Steuereinrichtung empfängt, und demzufolge an einem Ausgang ständig ein Dauersignal abgibt, welches auf einen ersten Eingang eines UND Verknüpfungsglieds gegeben wird, dessen zweitem Eingang das Ansteuersignal aus der Steuereinrichtung zugeführt wird, und dessen Ausgang mit einem Stellglied der Dosierpumpe verbunden ist.

Ein neu-triggerbares oder retriggerbares Monoflop ist allgemein bekannt. Es wird auch als Monoflop ohne Erholungszeit bezeichnet.

Ein "Monoflop" ist ein monostabiles Bauelement, das z. B. von einer ansteigenden oder abfallenden Impulsflanke in einen Zustand gebracht wird, in welchem es an seinem Ausgang ein Signal hohen Pegels während einer vorbestimmten Zeitspanne ausgibt. Nach Ablauf dieser Zeitspanne geht das Signal am Ausgang des Monoflops automatisch wieder in einen Grundzustand zurück. Der eine vorbestimmte Zeitspanne dauernde Impuls am Ausgang des Monoflops hat z. B. einen hohen Pegel, während der Grundzustand einem niedrigen Pegel entspricht.

Ein neu-triggerbares oder retriggerbares Monoflop unterscheidet sich von dem oben angesprochenen allgemeinen Monoflop dadurch, dass es bei Zufuhr eines neuen Triggerimpulses an seinem Eingang für die in ihm voreingestellten Zeitspanne am Ausgang das dann gelieferte Signal beibehält und erst danach wieder in den Grundzustand zurückkehrt. Gibt man also auf den Eingang eines retriggerbaren oder neu-triggerbaren Monoflops einen Impulszug, dessen Impulse eine Periodendauer besitzen, die kürzer ist als die Zeitspanne des von dem Monoflop bei Erhalt eines Einzelimpulses abgegebenen Ausgangsimpulses, so wird durch ständiges erneutes Triggern des Monoflops an dessen Ausgang ein Dauersignal, z. B. ein Dauersignal mit hohem Pegel erzeugt.

Die erfindungsgemäße Idee basiert nun auf der Erkenntnis, dass ein fehlerfrei arbeitender Mikrocontroller ein periodisches Setzsignal abgeben kann, das den Ausgang eines neu-triggerbaren Monoflops ständig auf dem aktiven, beispielsweise hohen Pegel hält, wohingegen ein von einer Störung beeinflusster Mikrocontroller ein solche periodisches Setzsignal nicht ausgibt, so dass dementsprechend bei einer Störung auch das Ausgangssignal des Monoflops kurze Zeit nach Wegfall des periodischen Setzsignals seitens des Mikrocontrollers in den Grundzustand übergeht. Durch die UND-Verknüpfung des Ausgangssignals des neu-triggerbaren Monoflops mit den von dem Mikrocontroller abgegebenen Ansteuersignalen für die Dosierpumpe wird erreicht, dass im Fall eines Fehlers in dem Mikrocontroller dieser keine periodischen Setzsignale abgibt, so dass demzufolge das Monoflop auch nicht das Dauersignal an das UND-Verknüpfungsglied liefert, das Verknüpfungsglied demzufolge also sicher an seinem Ausgang ein Signal mit niedrigem Pegel erzeugt, unabhängig davon, ob das Ansteuersignal aus dem Mikrocontroller korrekt ist oder nicht.

Bei einem fehlerhaften Mikrocontroller kann das für die Dosierpumpe gebildete Ansteuersignal instabil sein, d. h. es kann zu nicht vorhersehbaren Betriebszuständen der Dosierpumpe kommen, was möglicherweise gefährliche Zustände hervorruft. Durch die erfindungsgemäße Maßnahme wird erreicht, dass im Fall eines Fehlers in der Steuereinrichtung die Dosierpumpe zwangsweise abgeschaltet wird. Das Stellglied, mit dem die Dosierpumpe ein- und ausgeschaltet wird, ist vorzugsweise ein Transistor oder ein äquivalentes Bauelement. Die Dosierpumpe liegt z. B. zwischen dem Kollektor des Transistors und der Batteriespannung, während der Emitter des Transistors auf Masse liegt.

Die erfindungsgemäße Maßnahme kann bei einer kompletten, neuen Zusatzheizung für ein Fahrzeug realisiert werden, aber auch als separates Bauteil mit diskretem Monoflop und diskretem Verknüpfungsglied, kann also auch als Nachrüstsatz für existierende Fahrzeug-Zusatzheizgeräte ausgebildet sein.

Das oben erwähnte UND-Verknüpfungsglied kann auch ersetzt werden durch ein äquivalentes Verknüpfungsglied, beispielsweise durch ein NAND-Glied, wenn die Pegel der Signale entsprechend geändert werden.

Im Folgenden wird ein Ausführungsbeispiel der Erfindung anhand der Zeichnung näher erläutert. Es zeigen:
- Fig. 1: ein schematisches Blockdiagramm einer Sicherheitsvorrichtung für ein Fahrzeug-Zusatzheizgerät gemäß einer Ausführungsform der Erfindung,
- Fig. 2: ein Impulsdiagramm, das verschiedene Signalverläufe in der in Fig. 1 dargestellten Sicherheitsvorrichtung zeigt, um die Arbeitsweise der Vorrichtung zu veranschaulichen.

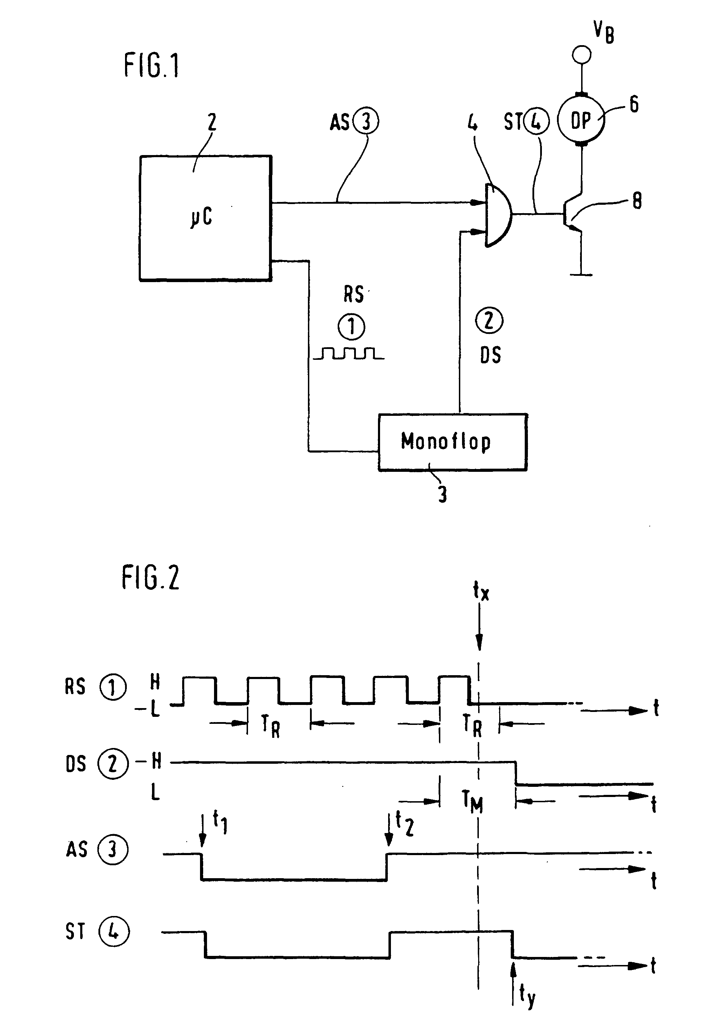

Fig. 1 zeigt Blockschaltbild einer Sicherheitsvorrichtung für ein Zusatzheizgerät eines Kraftfahrzeugs beispielsweise eines Lkws oder Pkws. Solche Zusatzheizgeräte sind allgemein bekannt und brauchen deshalb hier nicht im Einzelnen erläutert zu werden. Es wird z. B. verwiesen auf zahlreiche Patente und Patentanmeldungen der Anmelderin der vorliegenden Erfindung.

Ein wesentlicher Bestandteil eines Zusatzheizgeräts für ein Fahrzeug ist eine Steuereinrichtung, mit der u. a. der Betrieb einer Brennstoff-Dosierpumpe gesteuert wird, die dem Brenner des Heizgeräts Brennstoff zumisst.

Fig. 1 zeigt eine Steuereinrichtung in Form eines Mikrocontrollers (µC) 2, der in hier nicht näher dargestellter Weise verschiedene Einganssignale von Stellvorrichtungen, Sensoren oder dergleichen empfängt, und der an verschiedene Einrichtungen des Heizgeräts Stellsignale und Steuersignale gibt.

Die hier interessierenden Ausgangssignale des Mikrocontrollers 2 sind ein Ansteuersignal AS 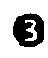 und ein Retrigger-Signal RS 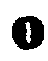 . Das Retrigger-Signal wird auf den Eingang eines retriggerbaren oder neu-triggerbaren Monoflops 3 gegeben. Solange das eine bestimmte Periodauer T_{R} aufweisende Retrigger-Signal auf den Eingang des Monoflops 3 gegeben wird, gibt das Monoflop 3 an seinem Ausgang ein Dauersignal DS 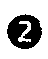 mit hohem Pegel ab.

In Fig. 2 ist bei 0 das Retrigger-Signal RS dargestellt. Bei 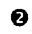 ist das vom Monoflop 3 ausgegebene Dauersignal dargestellt.

Bei 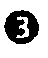 ist in Fig. 2 das von dem Mikrocontroller 2 abgegebene Ansteuersignal AS dargestellt. Dieses Ansteuersignal AS habe zunächst hohen Pegel, gehe dann bei t₁ auf niedrigen Pegel über, um dann bei t₂ auf hohen Pegel zu gehen.

Das Retriggersignal RS und das Ansteuersignal AS werden auf die beiden Eingänge eines offenen UND-Gatters 4 gegeben, an dessen Ausgang ein Stellsignal St 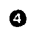 gebildet wird. Aufgrund der UND-Verknüpfung der Signale DS und AS entsteht das in Fig. 2 bei 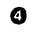 gezeigte Stellsignal, welches bei t₁ auf niedrigen Pegel geht und bei t₂ wieder auf hohen Pegel gelangt, da das Dauersignal DS an dem einen Eingang des UND-Gutters 4 dauernd auf hohem Pegel liegt, und somit das Stellsignal St dem Ansteuersignal AS folgt.

Bei tₓ in Fig. 2 trete eine Störung in dem Mikrocontroller 2 auf, demzufolge der Mikrocontroller nicht mehr das Retrigger-Signal RS ausgibt.

Das Stellsignal ST gelangt vom Ausgang des UND-Gutters 4 an die Basis eines als Stellglied fungierenden Transistors 8, in dessen Kollektorzweig ein Anschluss einer Dosierpumpe (DP) 6 liegt, deren anderer Anschluss mit der Batteriespannung V_{B} verbunden ist. Der Emitter des Transistors 8 ist auf Masse gelegt. Wenn das Stellsignal ST an die Basis des NPN-Transistors 8 gelegt wird, ist der Transistor 8 leitend, und demzufolge wird die Dosierpumpe 6 eingeschaltet. Hat das Stellsignal ST niedrigen Pegel, so sperrt der Transistor 8, und die Dosierpumpe 6 steht still.

Während gemäß Fig. 2 das Stellsignal ST bei 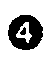 hohen Pegel hat, ist die Dosierpumpe 6 eingeschaltet. Bei niedrigem Pegel des Stellsignals ST bei 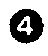 steht die Dosierpumpe 6 still.

Nach dem Auftreten der Störung bei tₓ bleibt der nächste Impuls des Retrigger-Signals RS bei 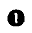 aus. Nach Ablauf der Periodendauer T_{R} des Retrigger-Signals RS bleibt das Dauersignal DS am Ausgang des Monoflops 3 noch eine Zeit lang auf hohem Pegel, wobei sich diese Restzeit bestimmt durch die für das Monoflop typische Zeitspanne T_{M}, die nach dem Triggern des Monoflops bis zum Abfallen des Ausgangssignals vergeht, falls nicht in dieser Zeit ein neues Triggersignal an den Eingang des Monoflops gelegt wird.

Wie in Fig. 2 gezeigt ist, ist vor dem Zeitpunkt tₓ das Monoflop 3 zum letzten Mal durch die links von tₓ gezeigte Vorderflanke des Signals RS getriggert worden. Zudiesem Zeitpunkt beginnt die Zeitspanne zu laufen, in der der Pegel des Ausgangssignals des Monoflops "H" ist. Nach Ablauf der Zeitspanne T_{M} fällt der Pegel des Ausgangssignals DS mangels eines weiteren Retriggersignals RS am Eingang des Monoflops 3 auf niedrigen Pegel "L" ab.

Durch diesen niedrigen Pegel wird das UND-Gatter 4 gesperrt, so dass im Zeitpunkt t_{y} mit dem Wechsel des logischen Pegels am Ausgang des Monoflops 3 auch der Pegel des Ausgangssignals des UND-Gatters 4 zwangsweise dem niedrigen Pegel "L" entspricht. Da im dargestellten Beispiel im Zeitpunkt ty das Stellsignal ST hohen Pegel hatte, fällt das Stellsignal ST zusammen mit dem Signal DS im Zeitpunkt t_{y} auf niedrigen Pegel ab.

Durch den niedrigen Pegel des Stellsignals ST wird der Transistor 8 gesperrt und damit die Dosierpumpe 6 still gesetzt. Die im Mikrocontroller 2 aufgetretene Störung kann also nicht zu dem gefährlichen Zustand führen, dass die Dosierpumpe unkontrolliert ein- und/oder ausgeschaltet wird.

## Patentansprüche

1. Fahrzeug-Zusatzheizgerät mit einer Brennstoff-Dosierpumpe (6) und einer Steuereinrichtung (2), die Ansteuersignale (AS) für die Dosierpumpe (6) ausgibt,
**gekennzeichnet durch**
ein neu-triggerbares Monoflop (3), das an einem Eingang periodische Signale (RS) von der Steuereinrichtung (2) empfängt und demzufolge an einem Ausgang ständig ein Dauersignal (DS) abgibt, welches auf einen ersten Eingang eines UND-Verknüpfungsglieds (4) gegeben wird, dessen zweiter Eingang das Ansteuersignal (AS) aus der Steuereinrichtung (2) empfängt, und dessen Ausgang mit einem Stellglied (8) für die Dosierpumpe (6) verbunden ist.

2. Fahrzeug-Zusatzheizgerät nach Anspruch 1,
**dadurch gekennzeichnet,**
**dass** die Steuereinrichtung ein Mikrocontroller (2) ist.

3. Fahrzeug-Zusatzheizgerät nach Anspruch 1 oder 2,
**dadurch gekennzeichnet,**
**dass** das Stellglied ein Transistor (8) ist.

4. Sicherheitsvorrichtung für ein Fahrzeug-Zusatzheizgerät nach einem der Ansprüche 1 bis 3,
**dadurch gekennzeichnet,**
**dass** das neu-triggerbare Monoflop (3) und das UND-Verknüpfungsglied (4) als diskrete Bauelemente zusätzlich zu der Steuerung (2) ausgebildet sind.

5. Sicherheitsvorrichtung nach Anspruch 4,
**dadurch gekennzeichnet,**
**dass** die Sicherheitsvorrichtung als Nachrüstsatz für ein Fahrzeug-Zusatzheizgerät ausgebildet ist.

## Claims

1. An auxiliary heater for a vehicle, comprising a fuel metering pump (6) and a control means (2) outputting control signals (AS) for the metering pump (6),
**characterized by**
a newly triggerable monoflop (3) receiving at an input thereof periodic signals (RS) from the control means (2) and, as a result thereof, continuously outputting at an output thereof a continuous signal (DS) that is fed to a first input of an AND operation element (4), the second input of which is fed with the control signal (AS) from the control means (2) and the output of which is connected to a controller (8) for the metering pump (6).

2. An auxiliary heater for a vehicle according to claim 1,
**characterized in that** the control means is a microcontroller (2).

3. An auxiliary heater for a vehicle according to claim 1 or 2,
**characterized in that** the controller is a transistor (8).

4. A safety device for an auxiliary heater for a vehicle according to any of claims 1 to 3,
**characterized in that** the newly triggerable monoflop (3) and the AND operation element (4) are formed as discrete components in addition to the control means (2).

5. A safety device according to claim 4,
**characterized in that** the safety device is in the form of a retrofittable set for an auxiliary heater for a vehicle.

## Revendications

1. Chauffage auxiliaire pour véhicule comprenant une pompe de dosage de carburant (6) et un dispositif de commande (2), qui envoie des signaux d'activation (AS) pour la pompe de dosage (6),
**caractérisé par**
une bascule monostable (3) redéclenchable, qui reçoit sur une entrée des signaux périodiques (RS) du dispositif de commande (2) et envoie en conséquence sur une sortie constamment un signal continu (DS) qui est envoyé sur une première entrée d'un élément logique ET (4), dont la seconde entrée reçoit le signal d'activation (AS) du dispositif de commande (2), et dont la sortie est reliée à un actionneur (8) pour la pompe de dosage (6).

2. Chauffage auxiliaire pour véhicule selon la revendication 1,
**caractérisé en ce que**
le dispositif de commande est un micro-contrôleur (2).

3. Chauffage auxiliaire pour véhicule selon la revendication 1 ou 2
**caractérisé en ce que**
l'actionneur est un transistor (8).

4. Dispositif de sécurité pour un chauffage auxiliaire pour véhicule selon l'une quelconque des revendications 1 à 3,
**caractérisé en ce que**
la bascule monoflop (3) redéclenchable et l'élément logique ET (4) sont conçus comme des composants discrets en supplément de la commande (2).

5. Dispositif de sécurité selon la revendication 4,
**caractérisé en ce que**
le dispositif de sécurité est conçu comme un lot d'adaptation pour un chauffage auxiliaire pour véhicule.
